# EUROPÄISCHE PATENTSCHRIFT

(11) **EP 2 356 433 B1**
(45) Veröffentlichungstag und Bekanntmachung des Hinweises auf die Patenterteilung: **13.12.2017**
(21) Anmeldenummer: 09820077.7
(22) Anmeldetag: 16.11.2009
(51) Int. Cl.: G01N 21/84

(54) **GERÄT UND VERFAHREN ZUR AUSWERTUNG UND BEWERTUNG EINES TESTSTREIFENS**
APPLIANCE AND METHOD FOR EVALUATION AND ASSESSMENT OF A TEST STRIP
APPAREIL ET PROCÉDÉ D'ANALYSE ET D'ÉVALUATION D'UNE BANDELETTE DE TEST

(30) Priorität: 14.11.2008 DE 102008058132
(43) Veröffentlichungstag der Anmeldung: 17.08.2011
(73) Patentinhaber: Optricon GmbH, 12489 Berlin (DE)
(72) Erfinder: PLICKERT, Volker, 14656 Brieselang (DE); MELCHIOR, Lutz, 12559 Berlin (DE); WIKO, Hein, 13189 Berlin (DE); JÖDICKE, Thorsten, 12623 Berlin (DE)
(74) Vertreter: Baumbach, Friedrich
(86) Internationale Anmeldenummer: PCT/DE2009/001607
(87) Internationale Veröffentlichungsnummer: WO 2010/054645

(56) Entgegenhaltungen:
- EP-A1- 1 843 147
- EP-A1- 1 936 362
- EP-A1- 1 965 199
- DE-A1-102004 008 539
- US-A1- 2006 176 483
- US-A1- 2006 240 541
- US-A1- 2007 031 283

## Beschreibung

Die Erfindung betrifft ein Verfahren zur quantitativen Bestimmung von Testergebnissen aus Diagnoseverfahren mit Hilfe eines optoelektronischen Auswertegeräts sowie das Auswertegerät selbst. Anwendungsgebiete der Erfindung sind Testverfahren in biochemischen Laboratorien, wie medizinische Diagnostik, forensische Medizin, Lebensmitteldiagnostik, Molekularbiologie, Biochemie, Gentechnik und alle anderen angrenzenden Gebiete sowie die Patientenkontrolle für den Heimanwender oder in Apotheken.

### Stand der Technik

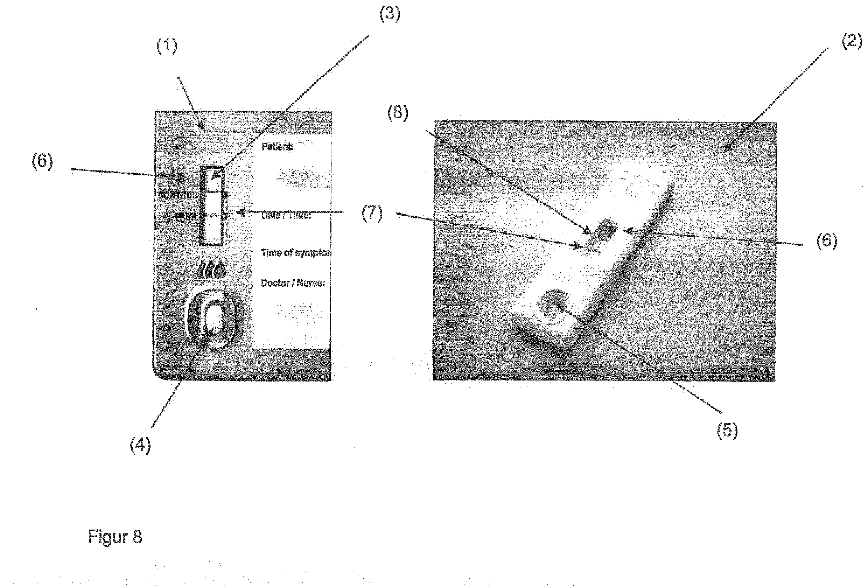

Vor allem in der modernen medizinischen Diagnostik hat die Anwendung von Schnelltests sowohl für Ärzte und Apotheken aber auch für den Selbstanwender zu Hause enorm an Bedeutung gewonnen.
In der in-vitro-Diagnostik beispielsweise, werden sogenannte Lateral Flow Assays dazu benutzt, um bei Patienten Diagnosen zu stellen. Dazu wird dem Patienten eine Körperflüssigkeit (Blut, Urin, Speichel, Schweiß) entnommen und auf einer Trägerkarte oder Kassette auf ein dafür vorgesehenes Feld aufgetragen. Figur 8 zeigt eine solche Testkarte bzw. Testkassette:
In einer Karte (20) bzw. einer Kassette (21) befindet sich ein Teststreifen (22) aus einem saugfähigen Vlies, der durch Öffnungen (23 und 24) sichtbar ist. In diese Öffnungen wird eine der Testperson entnommene Körperflüssigkeit (Blut, Speichel, Urin) aufgetragen. Die Körperflüssigkeit breitet sich auf dem Teststreifen aus und fließt durch die Kapillarkräfte in die Richtung der Sichtöffnung (25). Auf dem Streifen sind senkrecht zur Fließrichtung Reagenzien in streifenförmigen Linien aufgebracht (Antikörper), mit denen die Proteine aus der Körperflüssigkeit reagieren.
Im Sichtfeld kommt es an einer ersten Linie (26), der Testlinie - "Capture Line" zu einer Farbumschlagreaktion, die die Konzentration des zu detektierenden körpereigenen Proteins in der Körperflüssigkeit anzeigt. Die Probeflüssigkeit wandert weiter zu einer zweiten Linie, die Kontrolllinie (27) - "Control Line" und zeigt die Gültigkeit des Tests an.
Die Tests basieren auf Antikörper-Reaktionen von spezifischen Proteinen im Blut.

Man unterscheidet bei den Lateral-Flow-Assays prinzipiell kompetitive und nichtkompetitive Tests: Bei nicht-kompetitiven LFAs nimmt mit zunehmender Konzentration des Analyten die Intensität des Testsignals zu. Je höher die Analytkonzentration in der Körperflüssigkeit, desto stärker ist die Verfärbung der Testlinie. Bei kompetitiven LFAs kommt es mit zunehmender Analytkonzentration zu einer Intensitätsabnahme des Testsignals: Bei starker Analytkonzentration wird die Testlinie immer schwächer verfärbt.
Es existiert eine Fülle von solchen Tests mit quantitativen und qualitativen Nachweis. Es existiert jeweils eine bestimmte Schwellenkonzentration, die mittels eines Farbsignals nachgewiesen wird, wobei bei qualitativen Tests die Aussage genügt, dass sich überhaupt ein Farbumschlag vollzogen hat (z. B. Schwangerschaftstests), während bei quantitativen Tests die Analytkonzentration mit der Farbintensität innerhalb der Testzone (Testlinie) mit der Analytkonzentration korreliert. Die Erfindung bezieht sich ausschließlich auf die Detektion von quantitativen Tests. Dabei hat jeder Test einen speziellen aber genau reproduzierbaren Zusammenhang zwischen Analytkonzentration und Farbintensität.

So wird beispielsweise bei einem Herzinfarkt das Protein h-FABP in der Konzentration von wenigen nl in das Blut freigesetzt und ist bereits 15 Minuten nach dem Infarkt nachweisbar. Wird ein Blutstropfen von wenigen Nanolitern (nl)auf das Probenfeld gegeben, vollzieht sich auf der Testkarte die folgende Reaktion:
Die Blutbestandteile werden zerlegt (sog. Blutplasma), durch Kapillarkräfte gelangt das h-FABP zur Antikörper-Linie und reagiert dort mit den mit Gold-gelabelten Antikörpern. Diese wandern weiter zur Testlinie. In der Testlinie wird eine Verfärbung ausgelöst, wobei die Stärke der Verfärbung (also die Farbintensität) ein Maß für die Menge der Antikörper ist. Die Stärke des Infarktes bewirkt unterschiedliche Proteinkonzentrationen, was letztendlich unterschiedliche Farbintensitäten der Testlinien verursacht: Bei einer geringen Farbintensität liegt ein leichter Infarkt, bei einer starken Farbintensität liegt ein schwerer Infarkt vor. Die kolorierten Antikörper fließen weiter zur Kontroll-Linie. Diese signalisiert, ob der Test gültig ist oder nicht.

Die Bewertung der Farbintensität gibt also Auskunft über die Schwere des Vorfalls. Solche Tests mit quantitativer Bewertung gibt es inzwischen für verschiedene Gesundheitsdiagnosen, die letztendlich Auskunft über den Gesundheitszustand (point of care) des Patienten gibt. Die Vision der Biologen liegt darin, nicht nur bereits erfolgte, sondern auch dem Körper bevorstehende gesundheitlichen "Ereignisse" zu diagnostizieren bzw. vorherzusagen. In Zukunft soll es auch möglich sein, dass aus einer geringen Menge Blut bzw. anderen Körperflüssigkeiten auf einer gemeinsamen Karte verschiedene Diagnosen gewonnen werden. Die Marktaussichten erscheinen auch deshalb sehr groß, weil die Menschen zunehmend bereit sind, in die Gesundheit zu investieren.

In allen diesen Fällen ist eine genaue Quantifizierung des Testergebnisses von großer Bedeutung.

Es sind bereits mehrere Auswertegeräte, sogenannte Reader, zur quantitativen Bewertung aus dem Stand der Technik bekannt. So ist beispielsweise in EP 1965199 ein Auswertegerät zur Auswertung einer Testprobe beschrieben, wobei elektromagnetische Strahlung einer Strahlungsquelle auf eine in das Gerät eingesetzte Testprobe fällt, die reflektierte Strahlung durch eine Durchtrittsöffnung gelangt und auf die Messvorrichtung gelenkt wird.
Als Messvorrichtung in EP 1965199 beschrieben und allgemein gebräuchlich sind Kamerasysteme mit kommerzieller Bilderkennung und Auswertung. Solche Systeme verwenden übliche CCD-Kameras, wobei die Bilder in Videosystemen mit kommerziellen Betriebssystemen dargestellt werden. Diese Systeme sind in großen Stückzahlen verfügbar. Die Systeme stellen das Bild auf einem Bildschirm dar, wobei die Teststreifen mit wenigen Pixeln (je nach Bildauswertung) abgebildet werden. Die Auswertung der Farbintensität erfolgt dadurch, dass in einem speziellen Programm die Farbintensität der Pixel analysiert wird, die den Teststreifen abbilden. Die Bewertung der Farbintensität ist dabei von einer Fülle von Parametern (Weiß-Abgleich, Beleuchtung, usw.) abhängig. Bei diesen Verfahren ist die Auswertung jedoch sehr ungenau. Das Problem besteht dabei in der exakten Bestimmung der Konzentration der Antikörper, was hauptsächlich dadurch verursacht wird, dass die Teststreifen nicht homogen reagieren.

Ein Vorschlag zur Lösung dieses Problems wird in Dokument US 2005/0095697 offenbart. Darin werden die Signale auf CCD-Zeilen mit direkter elektronischer Ansteuerung abgebildet. Bei der Verwendung der CCD und direkter Ansteuerung (Schieberegister) kann jede der einzelnen Fotodioden direkt ausgelesen werden. Da jede einzelne Fotodiode 256 unterschiedliche Farbintensitäten erkennt, kann das abgebildete Signal in 256 Graustufen genau unterschieden werden.

Bei der direkten elektronischen Ansteuerung liegt der Vorteil darin, dass die Graustufen direkt ausgelesen und beispielsweise mit dem Wert verglichen werden, den beispielsweise ein weißer Hintergrund bietet. Diese Lösung mit einer CCD-Zeile bietet den Vorteil, dass man die CCD-Information direkt verarbeitet. Dafür ist der elektronische Aufwand höher als bei den kommerziellen Systemen. Man muss sich in die direkte Mikroprozessor-Programmierung einarbeiten. Dafür erkauft man sich als Vorteil, dass man die gesamte erforderliche Software im Mikroprozessor eines mobilen Gerätes unterbringen kann und auf das kommerzielle Betriebssystem und ständige Software-updates verzichten kann.

Da eine Zeile jedoch keine flächenhafte Bildauflösung bieten kann, ist für eine Auswertung mit dem Gerät nach US 2005/0095697 eine Bewegung des Testfeldes in Querrichtung zur Zeile notwendig, welches durch das Abtasten während des Einschiebens der Karte in den Schacht realisiert wird. Problematisch ist hierbei, dass der Anwender die Karte mit der richtigen Geschwindigkeit in den Schacht einschiebt bzw. der Sensor schnell genug arbeitet. Somit ist auch diese Methode ungenau und die Ergebnisse nicht ausreichend reproduzierbar.

Eine wesentliche Schwierigkeit bei den quantitativen Diagnosen besteht also darin, dass einerseits die Menge der Antikörper zu quantifizieren ist (im Gegensatz zu Test mit "digitalen" Aussagen z. B. schwanger, ja oder nein), anderseits aber die Teststreifen nicht homogen reagieren. Die Ursachen dafür sind vielfältig, die Konzentration in der aufzutragenden Substanz ist nicht homogen, der Auftrag gelingt nicht homogen, die Position der Kontroll- bzw. Testlinie im Testfeld ist nicht gleich, die Strichgeometrie ist abweichend usw.

### "AntiAging":

Ein weiteres Problem bei den Geräten besteht darin, dass die Messreproduzierbarkeit über die gesamt Gerätelebenszyklus und unter verschiedenen Umgebungseinflüssen (Temperatur, Luftfeuchte) gewährleistet werden muss. Das heißt, dass Tests mit gleicher Farbidentität unter verschiedenen Betriebstemperaturen und auch nach mehreren Jahren die gleichen Messwerte ergeben müssen. Technisch stehen dem entgegen, dass die Beleuchtungselemente im Gerät altern, so dass die optische Leistung bei konstantem Strom über die Zeit abnimmt und zusätzlich die optische Leistung abhängig von der Gerätetemperatur ist. Die Empfangsbauelemente (CCD) weisen einen gewissen Dunkelstrom und ein Eigenrauschen auf, wodurch die Messgenauigkeit eingeschränkt wird. Diese Größen sind von der Temperatur und der Zeit abhängig.

In hochwertigen Laborgeräten ist dies dadurch gelöst, dass entweder die Beleuchtungsstärke der Lichtquellen über eine Monitorfunktion (z. B. eine Fotodiode) geregelt wird und/oder die CCD zusätzlich auf konstante Temperatur gehalten wird. Dazu wird diese auf ein Peltierelement aufgebaut. Ein Peltierelement kühlt bzw. erwärmt die Träger. Solche Elemente sind vergleichsweise teuer und verbrauchen sehr viel Strom, so dass die Verwendung von Peltierelementen zur Temperierung in mobilen Geräten schwierig realisierbar ist.

### "Kalibrierung"

Eine weitere Schwierigkeit ist die Gewährleistung der Messgenauigkeit bei verschiedenen Geräten für den gleichen Test und bei unterschiedlichen Testchargen: Es muss gewährleistet werden, dass gleiche Tests (gleicher Typ) auch bei unterschiedlichen Testchargen gemessen mit unterschiedlichen Geräten die gleichen Ergebnisse erbringen. Dies wird bei hochwertigen Geräten (Labörgeräten) dadurch gewährleistet, dass den Tests pro Charge ein Speichermedium beigelegt wird, dass chargenspezifische Daten enthält und dem Test zugeordnet wird. Dieses Problem ist für mobile Geräte bisher nicht gelöst.

### "Testidentität"

Die Zahl der verschiedenen Tests nimmt ständig zu. Deshalb werden verstärkt Geräte für mehrere Tests ausgelegt. Der Operator muss vor dem Start der Messung dem Gerät eingeben, welcher Test gemessen wird und welche Ergebnisse erwartet werden können. Im Gerät sind im Speicher für die gelisteten Tests die Kalibrierkurven, also der Zusammenhang zwischen gemessener Farbintensität und Analytkonzentration in der Körperflüssigkeit hinterlegt. Das Gerät ruft dann im Gerät gespeicherte Erwartungswerte bzw. Wertetabellen auf. Besonders gefährlich ist dabei, dass die Testidentität verwechselt wird, also ein falscher Test aufgerufen werden kann. Deshalb ist es wünschenswert, dass das Gerät automatisch die Art des Tests erkennt.

### "Upgrade-Fähigkeit"

Bisher werden Geräte werksseitig für bestimmte Tests ausgelegt und kalibriert. Die Geräte können für zusätzliche Tests nicht erweitert werden. Solche zusätzlichen neuen Tests können sich von den existierenden zum Beispiel in unterschiedlichen Wertetabellen bei der Zuordnung zwischen gemessener Farbintensität und Analytkonzentration in der Körperflüssigkeit unterscheiden, und können auch unterschiedliche Lichtabsorptionen durch unterschiedliche Farben bei der Umschlagsreaktion in der Testlinie aufweisen.
Die Kunden wünschen sich Geräte, die für neue Tests nachgerüstet werden können, ohne dass die Geräte aufwendig an den Hersteller zurückgeschickt werden müssen.

DE 10 2004 008539 A1 offenbart eine Vorrichtung und ein Verfahren zur optischen Auswertung von Teststreifen, US 2006/0240541 A1 offenbart eine Vorrichtung bzw. ein Verfahren zu LAFs und US 2006/0176483 A1 befasst sich mit einem optischen Messgerät für Teststreifen

Der Erfindung lag somit folgende Aufgabe zugrunde, ein mobiles Handgerät zur Verfügung zu stellen, dass folgende Vorteile aufweisen soll:
1. ein verbessertes Auswerteverfahren und Gerät zu seiner Durchführung bereitzustellen, welches verlässliche und reproduzierbare quantitative Ergebnisse mit einer verbesserten Messgenauigkeit liefert und mit einer verringerten Störanfälligkeit;
2. eine Verbesserung der Mess-Reproduzierbarkeit über die Gerätelebensdauer, es muss gewährleistet sein, dass das Gerät auch nach mehreren Jahren die gleichen Werte misst (Anti-Aging);
3. Gerätedefekte oder optische Dejustagen automatisch erkannt und korrigiert werden können (Selbsttest);
4. dass die Messwerte zwischen unterschiedlichen Geräten nicht schwanken, also Geräteunterschiede ausgeglichen werden (Kalibrierung);
5. dass die Geräte für mehrere unterschiedliche Tests verwendet werden können, wobei gleichzeitig - um Verwechslungen auszuschließen - die Tests vom Gerät automatisch erkannt werden sollten (Automatische Erkennung der Testidentität);
6. die Geräte für zusätzliche Tests frei programmierbar und nachrüstbar sein sollten (Upgrade-Fähigkeit);

Diese Aufgabe wird gemäß den Ansprüchen gelöst. Die Erfindung betrifft somit ein Verfahren gemäß Anspruch 1, eine Vorrichtung gemäß Anspruch 13 und eine Verwendung gemäß Anspruch 19. Die Unteransprüche sind Vorzugsvarianten.

Die wesentliche Voraussetzung der Erfindung ist die Verwendung einer CCD-Matrix als Empfangselement und die Tatsache, dass das gesamte Bild vom Teststreifen ohne eine Relativbewegung zwischen Testkarte und Gerät aufgenommen und direkt von einem Mikroprozessor aufgenommen und verarbeitet wird.

Der Kernpunkt der Erfindung ist die überraschende Feststellung, dass die Erhöhung der Messgenauigkeit und Messreproduzierbarkeit von Lateral-Flow-Assays mit quantitativer Aussage auf einer Veränderung des Farbkontrastes beruhen und dass ferner diese Veränderung des Farbkontrastes durch die folgenden Merkmale realisiert werden kann:
Die Verwendung einer CCD-Matrix mit direkter Auswertung aller Pixelwerte in genau quantifizierbaren Farbwertstufen (256 Stufen oder mehr) und ihre direkte Auswertung durch einen Mikroprozessor, die Optimierung der Farbwertstufen durch steuerbare Beleuchtung, die Darstellung der Farbwertstufen in einem Pixelgebirge / Oberflächen-Gebirge als virtuelles Konzentrationsbild der Antikörperreaktionen, einen Algorithmus, der die Streifen automatisch im Ruhezustand der Probe findet (keine Scannerfunktionen, keine mechanische Fehleranfälligkeit) und ein automatisches Finden des Maximums und "Herausrechnen" von Fehlern (Verschmutzungen) und Inhomogenitäten.

Da die gesamte Menge der aufgetragenen Antikörper in Summe gleich ist, liegt der Erfindung die Idee zugrunde, über die Gesamtsumme der reagierenden und verfärbten Antikörper zu "integrieren".

Dafür wird das gesamte Feld des Signals auf eine CCD Matrix abgebildet. Die Teststreifen werden als "Pixelgebirge" dargestellt, wobei die Pixelhöhe proportional der detektierten Farbwertstufender Einzelpixel ist.
Es wird ein intelligenter Auswerte-Algorithmus durchgeführt, der durch orthogonal zueinander verlaufende Scans durch das Gebirge zunächst die Teststreifen findet (Maximum), einen Bereich definiert, der dem Teststreifen als zu detektierende Flächen definiert und über die Farbwertstufen aller dieser Pixel integriert und den Mittelwert bildet).

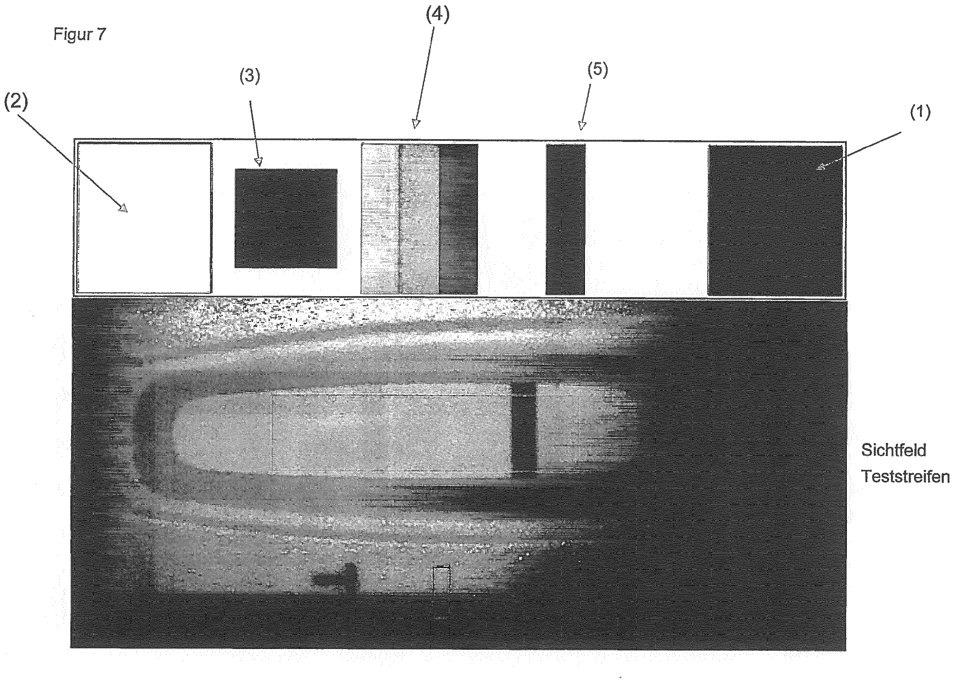

Zur Bewertung dieser integrierten Werte müssen Vergleichswerte zur Verfügung gestellt werden, die unabhängig von Schwankungen der Beleuchtung bzw. der Empfangsempfindlichkeit gleich sind. Dies wird erfindungsgemäß dadurch gelöst, dass im Gerät in der optischen Objektebene neben dem zu detektierenden Testfeld Referenzfelder bzw. Referenzbilder angeordnet sind, die keine Alterungseffekten unterliegen. Dieses Referenzfeld wird gleichzeitig mit dem Bild des Sichtfelds des Tests mit Testlinie und Kontrolllinie von der CCD aufgenommen. In Figur 7 ist dieses Feld in der Aufsicht dargestellt. Dieses Referenzfeld enthält an den Außenseiten jeweils ein Feld mit maximaler (15) bzw. minimaler (16) Farbintensität. Diese Felder dienen dazu, den Empfangswert zwischen Maximal- und Minimalwert zu scalieren. Weiterhin enthält das Referenzfeld ein Größenmess-Referenzfeld (17). Es dient zur Scalierung der Empfangsfläche. Da dessen Größenabmessungen genau bekannt sind, können die Testlinienabmessungen im gleichen Bildfeld unabhängig vom Abbildungsmaßstab skaliert werden. Weiterhin enthält das Feld Farbreferenzfelder in den RGB-Farben (18). Werden diese durch unterschiedliche RGB-Farbquellen beleuchtet, werden auf der CCD unterschiedliche Farbintensitäten detektiert und damit können die Farbwerte referenziert werden. Zusätzlich befindet sich auf dem Referenzfeld noch ein "Peakdetekt-Referenzfeld" (19), mit dem die Peakbreite und Lage referenziert werden können. Mit diesen Testfeldern können bei dem geräteinternen Testfeld vor Teststart eine Selbstkalibrierung (Selbsttest) durchgeführt werden.
Mit den außen liegenden Feldern erfolgt die Kalibrierung der Farbintensität und Helligkeit. Da die von Schwankungen ausgeschlossen ist, wird das Gerät unabhängig von Schwankungen der Beleuchtungsstärke, Alterung der Lichtquellen bzw. des Empfängers. Mit dem Größenvermessungsfeld können Bildkorrekturen vorgenommen werden, falls sich die Optik dejustiert haben sollte. Mit dem Farbreferenzfeld können Farbschwankungen ausgeglichen werden.

Zusätzlich wird die Definition eines Bereiches für den Weiß-Abgleich durchgeführt, über den ebenfalls integriert wird, und welcher damit den Vergleichswert bildet. Anschließend erfolgt eine Differenzbildung zwischen Pixel-Integrationswert und Weiß-Abgleich und der Vergleich des Wertes mit einem in einer Datenbank hinterlegten Kalibrierwert und die Ausgabe als Messwert. Wahlweise kann das Ergebnis auch in einer dreidimensionalen Darstellung der Teststreifen ausgegeben werden.

Ein Gerät zur Auswertung eines solchen Teststreifens enthält im Wesentlichen einen Einschub, in den der Teststreifen, welcher sich vorzugsweise in einer Testkarte oder Kassette befindet, eingeführt wird, eine Optik, die das Bild des Teststreifens auf einem Empfänger abbildet, dem Empfangsbauelement, einer Beleuchtung für den Teststreifen, der Auswerteelektronik und einer Anzeige. Weiterhin muss ein solches Gerät eine Stromversorgung und elektrische Schnittstellen aufweisen. Weitere Bauteile sind denkbar. Die Eingabe von Werten und Bedienung des Gerätes erfolgt über eine Tastatur oder einem Touchdisplay. Alles ist in einem gemeinsamen Gehäuse untergebracht.
Das Gerät ist als ein mobiles und eigenständiges Gerät ausgestaltet. Dabei wird das System durch die eigene interne Software vollständig gesteuert. Das Anschließen an Zusatzgeräte, wie externe Steuerrechner (Laptop) etc. ist dadurch nicht notwendig.

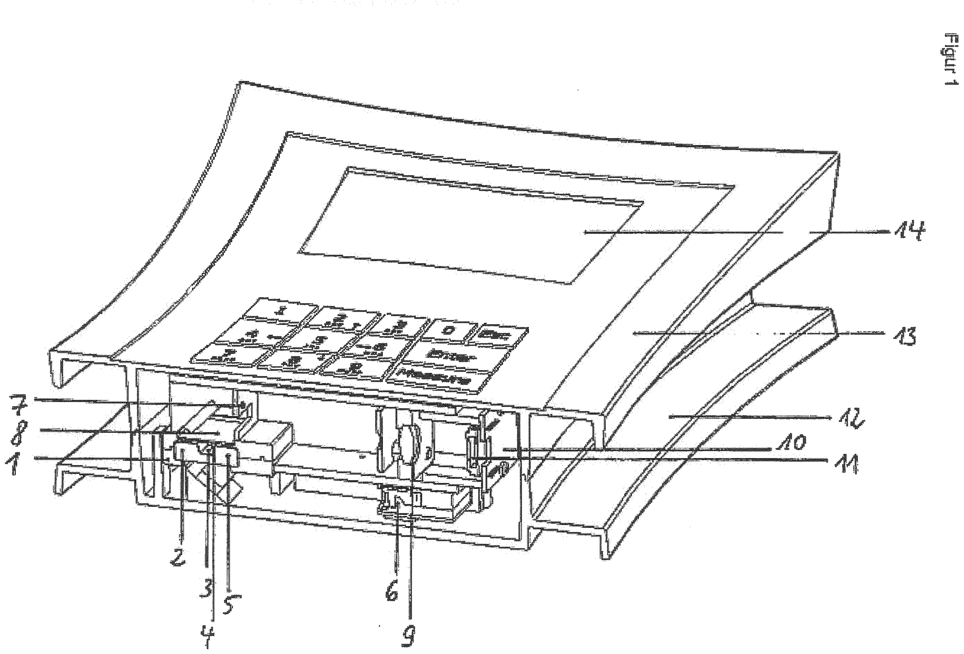

In Figur 1 ist eine schematisierte Darstellung des Gerätes gezeigt:
In dem Einschub (1) ist eine Kassette (2) mit einem Teststreifen (3) eingeführt, wobei der Teststreifen im Feld einer Vertiefung (4) der Kassette angeordnet ist. Weiterhin weist diese Karte ein Erkennungslabel, z. B. einen Strichcode oder Datamatrixcode auf, der zum Beispiel an der Unterseite der Karte befestigt sein kann. Das Label wird über einen Umlenkspiegel (5) von dem Scanner (6) abgetastet. Mit dem Label wird der Test identifiziert, und dem in der Datenbank bzw. Mikroprozessor bzw. Speicher hinterlegten Test zugeordnet.

Der Teststreifen im Testfeld (4) wird von einer Lichtquelle (LED's) auf der Beleuchtungs-Platine (7) beleuchtet. Die optische Abbildung erfolgt über einen Umlenkungsspiegel (8) und durch ein Objektiv (9). Die Empfängereinheit besteht aus einer Empfängerleiterplatte (10), auf der der CCD-Sensor (11) montiert ist. Nicht sichtbar sind die elektronische Ansteuerung der CCD auf einer Leiterplatte mit Mikroprozessor, die Stromversorgung, die Batterien. Alle Baugruppen sind in einem stabilen Gehäuse (12) montiert, welches im Ausführungsbeispiel eine Folientastatur (13) zur Bedienführung und ein Display (14) zur Anzeige der Messwerte und der Menüführung aufweist.
Zwischen dem Kassetteneinschub oberhalb der Kassette befindet sich eine durchsichtige Scheibe, durch die hindurch der Teststreifen abgebildet wird. Auf dieser Scheibe ist das Referenzfeld angeordnet, dass im Bild unmittelbar neben dem Teststreifen abgebildet wird - siehe Figur 7.

Der Teststreifen wird von den LED's beleuchtet. Das Bild des Testfeldes in der Platine wird über den Spiegel durch die Aussparung der Beleuchtungsplatine hindurch durch die Linse auf dem CCD-Sensor abgebildet. Die Bildinformation auf dem CCD-Sensor wird gesteuert über den Mikroprozessor ausgelesen und weiterverarbeitet.

In der Durchführung des Verfahrens werden Teststreifen ausgewertet, bei denen zum Test körperspezifische Stoffe, insbesondere Proteine, welche bei einem bestimmten Ereignis im Körper freigesetzt worden sind, mit Hilfe von gelabelten Antikörpern detektiert werden. Es wird durch einen Farbumschlag in einem Streifen die Konzentration der gelabelten Antikörper bestimmt, wobei die Farbintensität der Konzentration der Antikörper pro Volumen proportional ist. Dafür wird der Teststreifen mit Hilfe einer Optik auf eine CCD, die aus flächenhaft in einer Ebene angeordneten Pixeln (quasi einzelnen Fotodioden) besteht, abgebildet.
Pro Pixel wird die Intensität in bestimmten diskret darstellbaren Farb- oder Graustufen zur Auswertung genutzt, wobei die Information direkt verarbeitet wird.
Die relativen Verfärbungen werden dabei mit programmtechnisch hinterlegten Kalibrierwerten verglichen, vorzugsweise werden dabei nur Werte von "Linien-Scans" verwendet. Die Verwendung mit den aus Integration gewonnen Werten ist ebenso denkbar.

Erfindungsgemäß wird die digitale Pixelinformation pro Farb- oder Graustufe im Mikroprozessor in ihrer Intensität als Säule pro Pixel dargestellt, wobei die Säulenhöhe der Intensität entspricht, und diese Säulen nebeneinander in einer Ebene dargestellt werden, so dass die Intensitätsverteilung über das Testfeld als Oberflächenkontur oder Oberflächenprofil dargestellt wird, dessen Höhenverlauf dem Intensitätsverlauf der mit der CCD empfangenen Farbintensität entspricht.

Mittels dieser Oberflächenkontur oder dieses Oberflächenprofils wird mit einem einzelnen linienförmigen Abtasten, senkrecht zu den erwarteten zu detektierenden Streifen, die Lage des auszuwertenden Teststreifens erkannt, so dass die Orterkennung des Teststreifenfeldes einfach, schnell und ohne zusätzliche mechanische Relativ-Bewegung zwischen Detektor und Testfeld (zum Beispiel durch einen mechanischen Scanner) erfolgt.

Gemäß der Erfindung wird ein weiteres linienförmigen Abtasten, senkrecht zum ersten, im Bereich des auszuwertenden Streifens durchgeführt. Dies dient zur Erkennung lokaler Intensitätsänderungen. Dadurch wird im weiteren Verfahrensverlauf ausgeschlossen, dass die Intensitätsschwankungen zu Messungenauigkeiten führen. Die Lage des ersten Scans wird damit so korrigiert, dass er durch das Maximum des Teststreifens verläuft.

Erfindungsgemäß werden bestimmte abgegrenzte Flächen innerhalb des Testfeldes definiert, in denen durch Integration über die Graustufenwerte aller darin enthaltenen Pixel eine Summen- und Mittelwertbildung erfolgt. Dabei wird eine Fläche für einen Bereich des Teststreifens so definiert, dass in diesem keine Farbreaktion erwartet wird. Dieser Wert dient als Basiswert für spätere Vergleiche. Für die Bereiche, in denen auf der Basis des ersten Linien-Scans, Farbreaktionen erwartet werden, wird ein Summenwert und Mittelwert berechnet, der ins Verhältnis zu dem Summen- und/oder Mittelwert aus dem Bereich ohne Farbreaktion gesetzt wird. Aus dem Verhältnis wird im Vergleich mit bekannten Kalibrierwerten ein Wert für die Konzentration des Proteins errechnet. Da der Summen- und Mittelwert durch Integration entstanden sind, und die Summe der partiellen Farbreaktionen im Teststreifen der Anzahl der gelabelten Antikörper proportional ist, wird durch die Integration eine wesentliche höhere Messgenauigkeit erzielt als bei "üblichen" Linien-Scans.

In einer besonderen Ausführungsform der Erfindung wird die digitale Pixelinformation in einer dreidimensionalen Darstellung der Teststreifen als virtuelles Konzentrationsbild der Antikörperreaktionen als Ergebnis ausgegeben.
Durch diese Darstellung als Oberflächenrelief erhält die auswertende Person auf einen Blick wesentliche Erkenntnisse und Informationen in einem Bild, welches die Signifikanz des Messergebnisses (Höhe), die Testschwankungen und eventuelle verfahrensmäßig begründete Schwankungen enthält.

Durch diese flächenmäßige Darstellung in Verbindung mit dem erwarteten Ergebnis, welches ein Teststreifen ist und nicht einzelne Punkte, die eventuell von einer Flächenstörung oder Verschmutzung oder einem "Pixelfehler" der CCD herrühren könnten, ist es möglich Störungen, die das Messergebnis verfälschen könnten, durch entsprechende Software zu reduzieren.

In einer besonderen Ausführungsform der Erfindung ist die flächenmäßige Darstellung weiter bearbeitet, vorzugsweise durch die Kolorierung bestimmter Werte, so dass beispielsweise eine dreidimensionale Darstellung erzielt wird.

Das erfindungsgemäße Verfahren ist weiter gekennzeichnet dadurch, dass im CCD-Matrix-Sensor jede der einzelnen Fotodioden direkt angesteuert und ausgelesen wird.
Die digitale Pixelinformation kann erfindungsgemäß mit Hilfe von beliebig vielen Graustufen (2 exp x) wiedergegeben werden. Vorzugsweise wird die Pixelinformation mit Hilfe von 32 bis 16777216 Farbwertstufen, besonders bevorzugt mit Hilfe von 256 Farbwertstufen und ganz besonders bevorzugt mit Hilfe von 4096 Graustufen wiedergegeben.

In einer bevorzugten Variante werden die Farbwertstufen durch eine steuerbare Beleuchtung optimiert.

Als Ausgangsmaterialien werden erfindungsgemäß Körperflüssigkeiten oder Lösungen enthaltend Bestandteile aus Körperflüssigkeiten verwendet.

In einer besonderen Ausführungsform der Erfindung werden als Ausgangsmaterialien Blut, Serum oder Urin eingesetzt.

In einer bevorzugten Ausführungsform wird das erfindungsgemäße Verfahren zur Auswertung von Lateral Flow Assays, besonders bevorzugt zur Auswertung von Lateral Flow Assays basierend auf Antikörper-Antigenreaktionen mit dem spezifischen Protein h-FABP zur Erkennung eines Herzinfarkts eingesetzt.

Die Erfindung betrifft weiterhin ebenfalls ein Gerät zur Durchführung des erfindungsgemäßen Verfahrens.
Eine bevorzugte Ausführungsform ist ein Gerät zur Auswertung eines Teststreifens enthaltend einen Einschub, eine Optik, ein Empfangsbauelement, eine Beleuchtung für den Teststreifen, eine Auswerteelektronik enthaltend einen Auswerte-Algorithmus, eine Anzeige, eine Stromversorgung und elektrische Schnittstellen sowie eine Ausgabeeinrichtung, welches dadurch gekennzeichnet ist, dass es die digitale Pixelinformation pro Farb- oder Graustufe im Mikroprozessor in ihrer Intensität als Säule pro Pixel darstellt, wobei die Säulenhöhe der Intensität entspricht, und diese Säulen nebeneinander in einer Ebene dargestellt sind, so dass die Intensitätsverteilung über das Testfeld als Oberflächenkontur oder Oberflächenprofil dargestellt ist, dessen Höhenverlauf dem Intensitätsverlauf der mit der CCD empfangenen Farbintensität entspricht. Ferner betrifft die Erfindung auch die Verwendung dieses Geräts zur Durchführung des erfindungsgemäßen Verfahrens.

Durch das erfindungsgemäße Verfahren und das Gerät zur seiner Durchführung wird eine verbesserte Auswertungsmöglichkeit für diagnostische Tests bereitgestellt, welches verlässliche und reproduzierbare quantitative Ergebnisse mit einer höheren Genauigkeit liefert. Die erfindungsgemäßen Vorteile sind, unter anderen, die Erhöhung der Reproduzierbarkeit, die Reduzierung des Messfehlers, das Finden der Teststreifen, trotz unterschiedlicher, Lage im Testfeld, und die Ausgabe gleicher Messwerte trotz unterschiedlicher Testlinien -Geometrie (Messstreifen zum Beispiel "verlaufen" basierend auf der Annahme dass die Summe der aufgebrachten zu reagierenden Partikel in Summe gleich ist und die Summe der verfärbten Partikel proportional zur Konzentration des Proteins ist).

In einer besonderen Ausführungsform der Erfindung ist das Gerät dazu geeignet, Tests verschiedener mathematischer Verläufe zwischen Veränderung der Farbintensität und der Analytkonzentration (Polynome n-ten Grades, aber stetige Funktionen) auszuwerten. Dabei sind die Geräte universell einsetzbar, wobei für die jeweilige Tests Kalibrierkurven im Gerät hinterlegt werden.

Erfindungsgemäß zeichnet sich das Gerät dadurch aus, dass eine CCD- Matrix in einem mobilen Gerät verwendet wird, mit der ein Bild aufgenommen wird, was die Messung störunanfällig macht. Anschließend wird mit dem "hardwarenahen" Mikroprozessor und dem gerätinternen Speicher weitergearbeitet um ein störungsfreies und zuverlässiges Signal zu erhalten. Die Universalität des mobilen Gerätes kann erweitert werden, indem durch eine Einrichtung zur Code Erkennung und die Verwendung mobiler Speicher (SD- Karte) zusätzlich neue Tests nachgerüstet werden können.

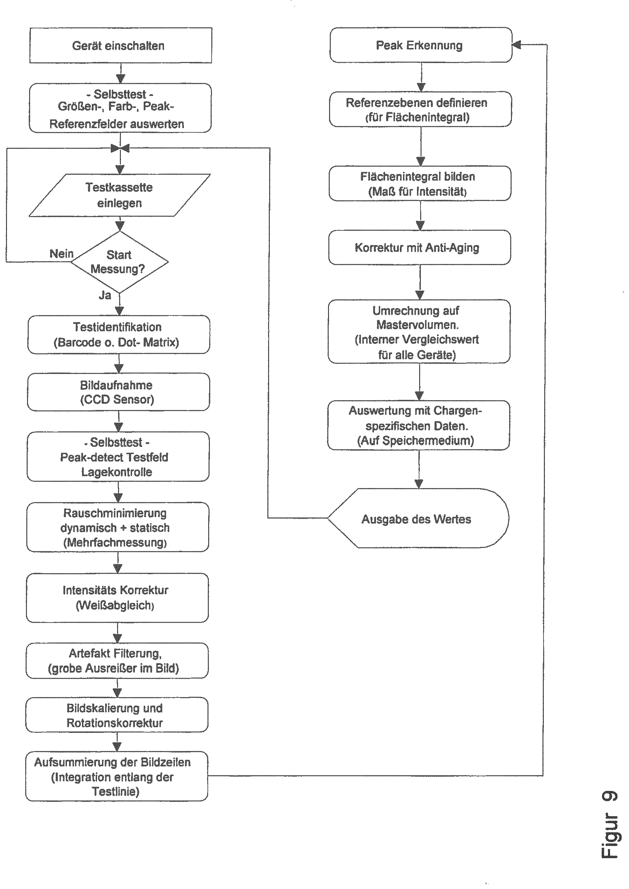

Der gesamte Messablauf im Gerät verläuft in folgender Weise (s. Figur 9)
- Nach dem Einschalten des Gerätes und dem Einschieben der Testkassette erfolgt ein sog. Selbsttest. Dabei werden in dem oben erläuterten Referenzfeld, dass sich direkt neben dem Messobjekt befindet, die Farbintensitätswerte referenziert, die Bildgröße referenziert und ggf. mit den im Speicher hinterlegten Werten korrigiert.
- Der Operator startet die Messung und gibt die Patientendaten ein.
- Das Gerät identifiziert den Test anhand des auf der Rückseite aufgebrachten Barcodes oder eines im Sichtfeld angeordneten Data-Matrix-Codes.
- Der Sensor nimmt die Bilder auf.
- Es erfolgt ein Selbsttest des Peaks. Befindet sich der Peak der Testlinie im erwarteten Testfeld? Gegebenenfalls wird das Feld, von dem die CCD-Werte aufgenommen werden, korrigiert.
- Zur Rauschminimierung erfolgt eine Mehrfachmessung. Es wird über die gemessenen Werte gemittelt, so dass Minimal- und Maximal-Werte aus dem Rauschen des Detektors "geglättet" werden.
- Intensitäts-Korrektur: Es erfolgt ein Weißabgleich. Die gemessenen Werte für die minimale optische Intensität werden von dem gemessenen Werten abgezogen. Durch den Intensitätsabgleich werden Unterschiede in der Beleuchtung des Testfeldes und durch Alterung oder Temperaturschwankungen bedingte Beleuchtungsschwankungen ausgeglichen.

Die Figur 2 zeigt die prinzipielle Verfahrensweise: Beim sogenannten "Schwarzabgleich" werden die Farbintensitätswerte der einzelnen CCD-Elemente (Pixel) subtrahiert, die ohne Beleuchtung der CCD als sog. Dunkelstrom bzw. Rauschen auftreten.
- Filterung auf Artefakte: Die Software erkennt grobe Ausreißer im Feld, beispielsweise Verschmutzungen im Testfeld und gleicht diese Werte aus.
In Figur 3 ist diese Filterung dargestellt. Es wird ein Medianfilter verwendet, durch den Pixelfehler eliminiert werden und Restrauschen des Bildes minimiert werden. Der Filtergrad kann mit der Software eingestellt werden.
- Bildskalierung und Rotationskorrektur: Im Vergleich mit den Referenzfeldern wird erkannt, ob die Testlinie verdreht im Testfeld liegt. Dies wird durch eine Rotationskorrektur korrigiert.
- Aufsummierung der Bildzeilen (Integration entlang der Testlinie). Die Bildzeilen werden aufsummiert und Mittelwerte gebildet.
- Es wird eine Peakerkennung durchgeführt
- Zum Peak wird eine Referenzebene definiert. Die Referenzebene definiert die Intensitätswerte für die Umgebung des Teststreifens.

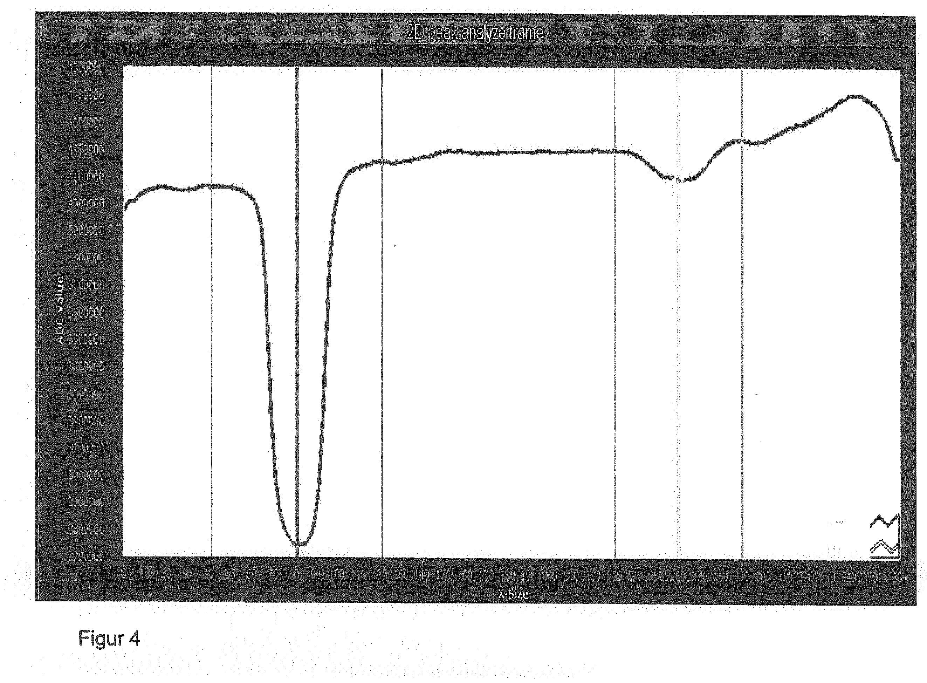

Figur 4 zeigt die Mittelwerte der Kurve für die entlang der Test- und Kontrolllinie aufsummierten Werte und die Linien durch die Peak-Minimas.
- Es wird ein Flächenintegral für die Fläche zwischen der Referenzebene und dem Peak gebildet. Dieses Flächenintegral ist ein Maß für den Gesamt-Farbumschlag in der Testlinie.
- Es erfolgt eine Korrektur mit dem Anti-Aging. Dabei wird das Flächenintegral verglichen und normiert mit der aus beim Selbsttest ermittelten Referenzkurve zwischen Min-und Max-Wert (Schwarz / Weiß-Abgleich).
- Im Speicher ist werksseitig für jedes Gerät eine Mastervolumen-Kalibrierung hinterlegt. Mit einem Satz Masterkarten mit genau definierter Farbintensität wird eine Wertetabelle mit Korrekturwerten im Gerät hinterlegt, so dass geräteunabhängig die Masterkarten immer gleiche Werte anzeigen. In diesem Schritt wird der gemessene und integrierte Wert auf diesen kalibierten Mastervolumenwert umgerechnet.
- Unterschiedliche Tests haben testspezifische und chargenabhängige Werte. Diese können linear sein oder einen beliebigen stetigen Verlauf aufweisen. Diese spezifischen Daten werden durch ein Speichermedium zugeführt und sind im Gerät hinterlegt. In diesem Schritt werden die Mastervolumenwerte mit den test- und chargenspezifischen Werten skaliert und errechnet.
- Letztendlich wird dieser Wert zur Anzeige gebracht.
Weitere vorteilhafte Eigenschaften und Merkmale der Erfindung werden aus dem nachfolgenden Ausführungsbeispiel ersichtlich, welches als nicht erschöpfendes Beispiel zur Erläuterung dienen soll.

### Ausführungsbeispiel 1

Vergleich einer herkömmliche Darstellungsweise und der Darstellungsweise mit dem erfindungsgemäßen Verfahren.

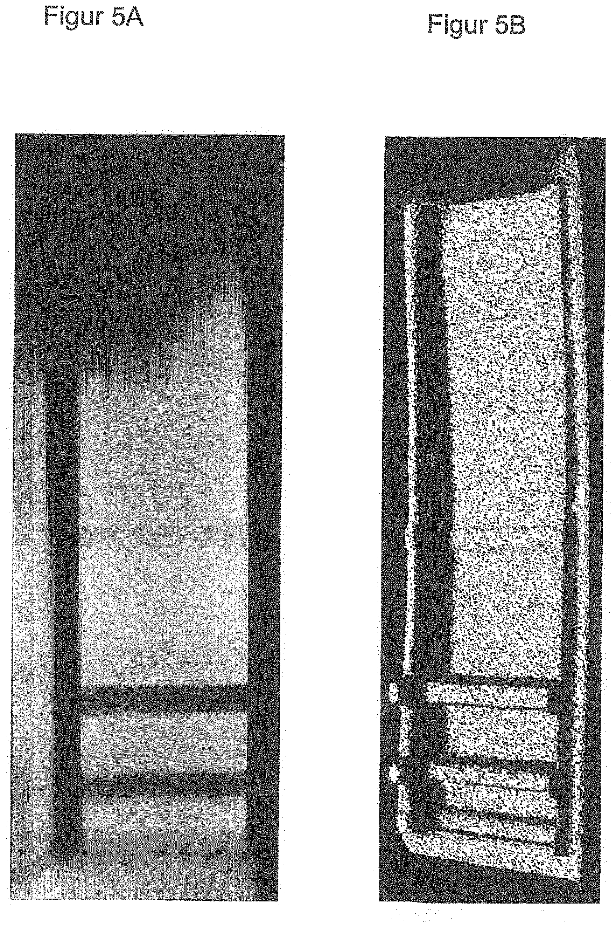

In Figur 5A sind Linien eines Lateral-Flow-Assays, wie sie mit einer herkömmlichen CCD-Matrix und einer Bildauswertung erkannt werden, dargestellt.
Im Vergleich dazu zeigt Figur 5B, wie die Grauwerte im erfindungsgemäßen Verfahren durch Verarbeitung der digitalen Bildinformation pro Pixel dargestellt werden:
Diese Darstellungsart zeigt einerseits die Fehlerquelle in der Auswertung herkömmlicher Verfahren, als auch die Möglichkeiten, die sich aus dieser gewonnen Darstellung bieten: Es können beliebig Schnitte gelegt werden (um zum Beispiel die Streifen zu finden). Es kann deutlich auch die sehr schwache Linie detektiert werden. Eine Integration über die Einzelpixelwerte ist wesentlich genauer als beispielsweise nur ein Schnitt. Selbst die Bildwölbung (verursacht durch die Optik) kann durch die Software korrigiert werden.

### Ausführungsbeispiel 2

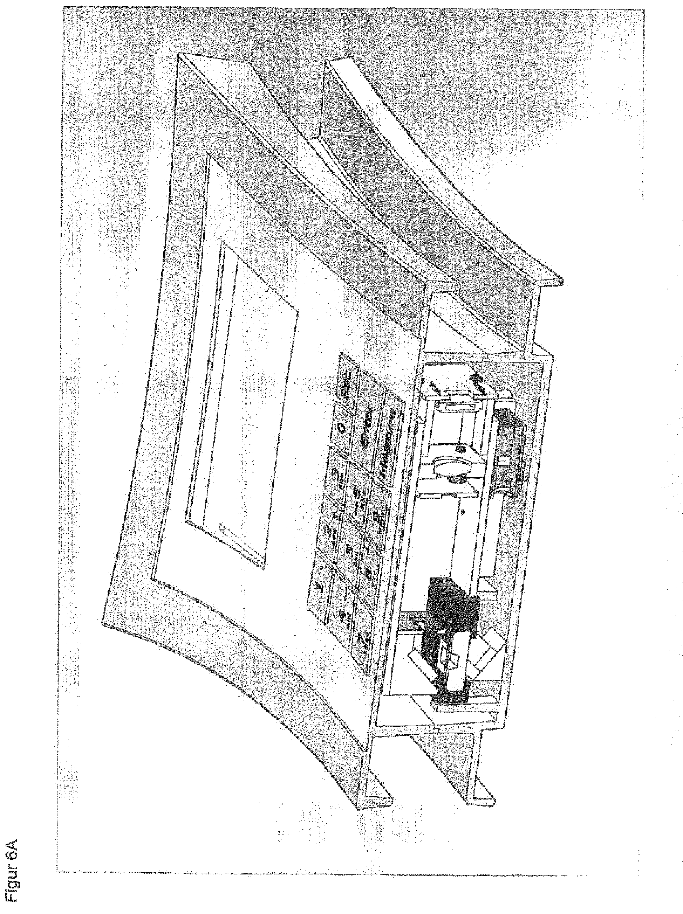

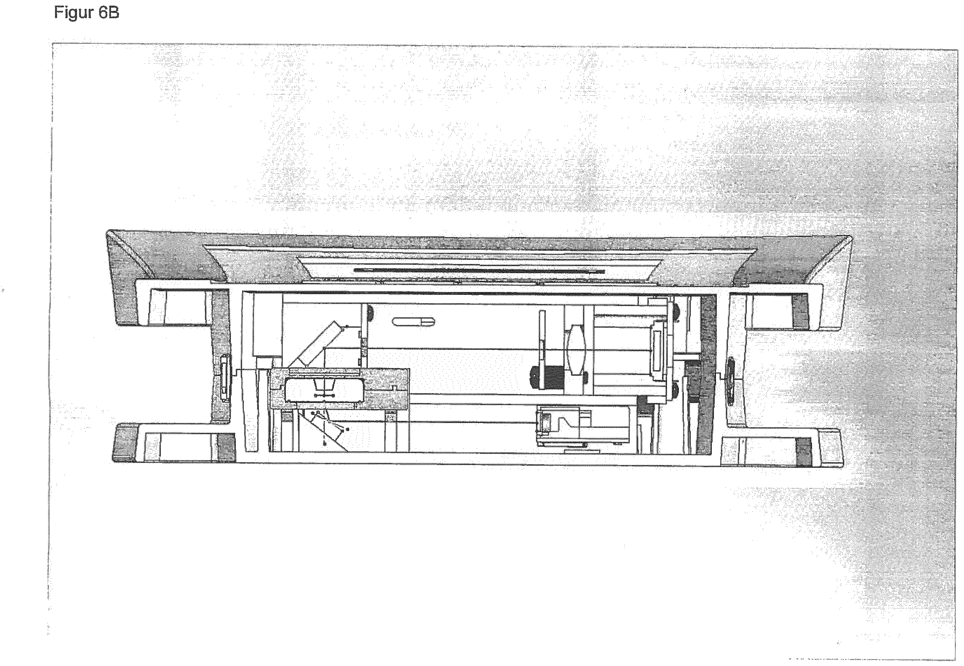

Figuren 6A+ 6B zeigen eine bevorzugte Ausführungsform des erfindungsgemäßen mobilen Auswertegerätes. Es ist der Schnitt durch optische Abbildungsachse der Optikeinheit dargestellt.

Alle in der vorangehenden Beschreibung, den nachfolgenden Ansprüchen und den Abbildungen dargestellten Merkmale sind sowohl einzeln als auch in beliebiger Kombination für die Verwirklichung der Erfindung in ihren verschiedenen Ausgestaltungen von Bedeutung sein.

### Legende zu den Figuren

- Figur 1: schematisierte Darstellung des Gerätes

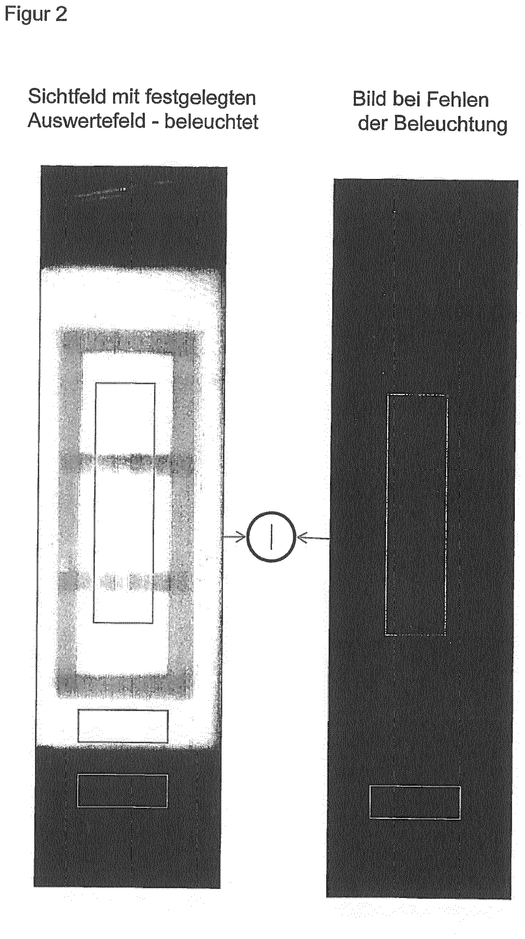

- Figur 2: prinzipielle Verfahrensweise

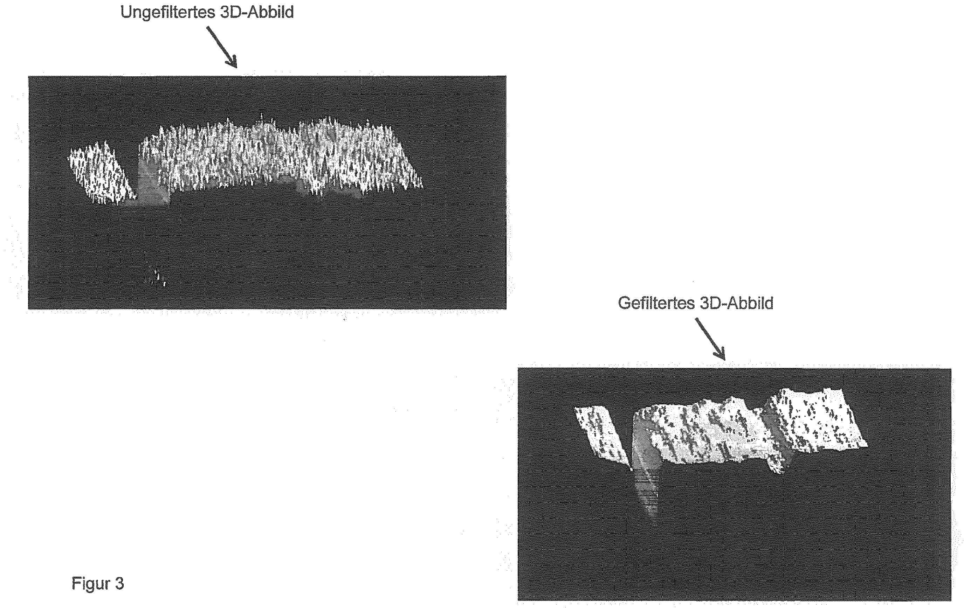

- Figur 3: Darstellen der Filterung mittels Medianfilter
- Figur 4: zeigt die Mittelwerte der Kurve für die entlang der Test- und Kontrolllinie aufsummierten werte und der Linie durch die Peak-Minimas
- Figur 5A: zeigt Linien eines Lateral-Flow-Assays, wie sie mit einer herkömmlichen CCD-Matrix und einer Bildauswertung erkannt werden,
- Figur 5B: zeigt wie die Grauwerte im erfindungsgemäßen Verfahren durch Verarbeitung der digitalen Bildinformation pro Pixel dargestellt werden:
- Figuren 6A +6B: zeigen die bevorzugte Ausführungsform des erfindungsgemäßen mobilen Auswertegerätes.
- Figur 7: Bildebene mit Bild und Referenzbild, Aufsicht Bezugszeichen (15) Referenzfeld mit maximaler Farbintensität
(16) Referenzfeld minimale Farbintensität
(17) Größen-vermessungs- Referenzfeld
(18) Farbreferenzfelder
(19) Peak- Detektions-Referenzfeld
- Figur 8: Lateralflow-Assay, Testkarte bzw. Testkassette
Bezugszeichen (20) Karte
(21) Kassette
(22) Teststreifen
(23) (24) Proben-Öffnung Peak- Detektions-Referenzfeld
(25) Sichtöffnung
(26) Testlinie (Capture Line)
(27) Kontroll-Linie /Control Line
- Figur 9: Auswerte-Algorithmus

## Patentansprüche

1. Verfahren zur Auswertung eines Teststreifens mit Test- und Kontrolllinien mit einem Gerät, enthaltend einen Einschub für eine Kassette mit Teststreifen, eine Optik, die das Bild des Teststreifens auf im Testfeld des Geräts, einem Empfänger abbildet, Referenzfelder, ein Empfangsbauelement mit einer CCD-Matrix aus flächenhaft in einer Ebene angeordneten Pixeln, eine Beleuchtung für den Teststreifen, eine Auswerteelektronik, enthaltend einen Mikroprozessor und einen Auswerte-Algorithmus, eine Anzeige, eine Stromversorgung und elektrische Schnittstellen sowie eine Ausgabeeinrichtung, wobei zur Auswertung des Teststreifens, bei dem zum Test körperspezifische Stoffe, insbesondere Proteine, welche bei einem bestimmten Ereignis im Körper freigesetzt worden sind, mit Hilfe von gelabelten Antikörpern anhand von den Test- und Kontrolllinien detektiert werden, durch einen Farbumschlag in einem Streifen die Konzentration der gelabelten Antikörper bestimmt wird, wobei die Farbintensität der Konzentration der Antikörper pro Volumen proportional ist, der Teststreifen mit Hilfe einer Optik auf die CCD-Matrix aus flächenhaft in einer Ebene angeordneten Pixeln als Empfangselement, abgebildet wird, dabei pro Pixel die Intensität in bestimmten diskret darstellbaren Farb- oder Graustufen zur Auswertung genutzt wird und die relative Verfärbung mit programmtechnisch hinterlegten Kalibrierwerten verglichen wird, wobei
- das gesamte Bild des Teststreifens auf die CCD-Matrix abgebildet wird,
- die digitale Pixelinformation pro Farb- oder Graustufe im Mikroprozessor in ihrer Intensität als Säule pro Pixel dargestellt wird, wobei die Säulenhöhe der Intensität entspricht und diese Säulen nebeneinander in einer Ebene dargestellt werden, so dass die Intensitätsverteilung über den Teststreifen als Oberflächenprofil dargestellt wird, dessen Höhenverlauf dem Intensitätsverlauf der mit der CCD-Matrix empfangenen Farbintensität entspricht,
- ein Auswerte-Algorithmus durchgeführt wird, der durch orthogonal zueinander verlaufende Scans durch das Oberflächenprofil des Teststreifens zunächst den Teststreifen findet, einen Bereich definiert, der den Teststreifen als zu detektierende Fläche definiert und über die Farbwertstufen aller dieser Pixel integriert und den Mittelwert bildet,
- geräteinterne Referenzfelder, welche an den Außenseiten jeweils ein Feld mit maximaler bzw. minimaler Farbintensität, ein Größenvermessungs-Referenzfeld, Farbreferenzfelder in den RGB-Farben und ein Peakdetektions-Referenzfeld enthalten und die sich in einer optischen Objektebene des Geräts befinden, gleichzeitig mit dem Bild des Teststreifens mit Test- und Kontrolllinien von der CCD-Matrix aufgenommen werden, wobei mit den Referenzfeldern mögliche Fehler- und Alterungsprozesse eliminiert werden,
- die Definition eines Bereiches für einen Weiß-Abgleich durchgeführt wird, über den ebenfalls integriert wird und anschließend eine Differenzbildung zwischen dem Mittelwert und dem Weiß-Abgleich erfolgt,
- der Vergleich des Wertes der Differenzbildung mit einem in einer Datenbank hinterlegten Kalibrierwert und
- die Ausgabe des Vergleichs als Messwert erfolgt.

2. Verfahren nach Anspruch 1, **dadurch gekennzeichnet, dass** vor Messbeginn anhand der Referenzfelder eine Selbstkalibrierung durchgeführt wird und dass eine Testidentifizierung durchgeführt wird.

3. Verfahren nach einem der Ansprüche 1-2, **dadurch gekennzeichnet, dass** zur Eliminierung möglicher Fehler- und Alterungsprozesse eine Peakkorrektur, eine Rauschglättung, eine Intensitätskorrektur, eine Filterung auf Artefakte, eine Bildskalierung und Rotationskorrektur, eine Peakerkennung, eine Anti-Aging Korrektur und eine Mastervolumen-Kalibrierung durchgeführt werden.

4. Verfahren nach einem der Ansprüche 1-3, **gekennzeichnet dadurch, dass**
a) nach dem Einschalten des Gerätes und dem Einschieben der Kassette mit Teststreifen eine Selbstkalibrierung durchgeführt wird, wobei mit den Referenzfeldern die Farbintensitätswerte referenziert, die Bildgröße referenziert und ggf. mit den im Speicher hinterlegten Werten korrigiert werden
b) durch den Operator die Messung gestartet und Patientendaten eingegeben werden,
c) durch die CCD-Matrix die Bilder aufgenommen werden
d) anschließend die Werte aus den Bildzeilen aufsummiert und Mittelwerte gebildet werden,
e) die Peakerkennung durchgeführt wird, wobei zum Peak eine Referenzebene definiert wird, welche die Intensitätswerte für die Umgebung des Teststreifens definiert und
f) dieser Wert zur Anzeige gebracht wird.

5. Verfahren nach einem der Ansprüche 1-4, **dadurch gekennzeichnet, dass** vor der Messung durch das Gerät der Teststreifen anhand eines auf der Rückseite des Teststreifens aufgebrachten Barcodes oder eines im Sichtfeld der CCD-Matrix angeordneten Data- Matrix- Codes identifiziert wird.

6. Verfahren nach einem der Ansprüche 1-5, **dadurch gekennzeichnet, dass** nach erfolgter Aufnahme der Bilder durch die CCD-Matrix ein Selbsttest des Peaks erfolgt, wobei festgestellt wird, an welcher Stelle im Testfeld sich der Peak befindet und das Feld, von dem die CCD-Werte aufgenommen wurden, gegebenenfalls korrigiert wird.

7. Verfahren nach einem der Ansprüche 1-6, **dadurch gekennzeichnet, dass**
• eine Mehrfachmessung durchgeführt wird, wobei eine Mittelung über die gemessenen Werte erfolgt, so dass das Rauschen der CCD-Matrix egalisiert werden kann,
• eine Intensitäts-Korrektur mittels Weißabgleich durchgeführt wird, wobei die gemessenen Werte für die minimale optische Intensität von den gemessenen Werten abgezogen werden,
• eine Filterung auf Artefakte durchgeführt wird, wobei durch einen Medianfilter Pixelfehler eliminiert und Restrauschen des Bildes minimiert werden,
• eine Bildskalierung und eine Rotationskorrektur durchgeführt werden, wobei im Vergleich mit den Referenzfeldern erkannt wird, ob die Testlinie verdreht im Testfeld liegt und dies durch eine Rotationskorrektur korrigiert wird,
• ein Flächenintegral für die Fläche zwischen der Referenzebene und dem Peak des Teststreifens gebildet wird wobei eine AntiAging Korrektur durch Vergleich des Flächenintegrals mit der beim Selbsttest ermittelten Referenzkurve zwischen Minimal- und Maximal- Wert (Schwarz / Weiß- Abgleich) durchgeführt wird und
• eine Mastervolumen-Kalibrierung erfolgt, wobei mit Masterkarten mit mindestens einer Wertetabelle mit Korrekturwerten der gemessene und integrierte Wert auf diesen kalibierten Mastervolumenwert umgerechnet wird.

8. Verfahren nach einem der Ansprüche 1-7, **dadurch gekennzeichnet, dass** mittels des Oberflächenprofils mit einem einzelnen linienförmigen Abtasten, senkrecht zu den erwarteten zu detektierenden Streifen die Lage des auszuwertenden Teststreifens erkannt wird und ein weiteres linienförmiges Abtasten senkrecht zum ersten im Bereich des auszuwertenden Streifens zur Erkennung lokaler Intensitätsänderungen durchgeführt und damit die Lage des ersten Abtastens so korrigiert wird, dass er durch das Maximum des Teststreifens verläuft.

9. Verfahren nach einem der Ansprüche 1-8, **dadurch gekennzeichnet, dass** bestimmte abgegrenzte Flächen innerhalb des Testfeldes definiert werden, in denen durch Integration über die Farbwertstufen aller darin enthaltenen Pixel die Summe und der Mittelwert gebildet wird, wobei eine Fläche für einen Bereich des Teststreifens so definiert wird, dass in diesem kein Farbumschlag erwartet wird und dieser Wert als Basiswert für spätere Weiß-Abgleiche definiert wird und für die Bereiche, in denen ein Farbumschlag erwartet wird, ein Summenwert und ein Mittelwert berechnet wird, der ins Verhältnis zu dem Summen- und Mittelwert aus dem Bereich ohne Farbumschlag gesetzt wird und aus dem Verhältnis im Vergleich mit bekannten Kalibrierwerten ein Wert für die Konzentration des gesuchten Stoffes, vorzugsweise Proteins, errechnet wird.

10. Verfahren nach einem der Ansprüche 1-9, **dadurch gekennzeichnet, dass** die Darstellung als Oberflächenprofil die Signifikanz des Messergebnisses, die Testschwankungen und eventuelle verfahrensmäßig begründete Schwankungen enthält und wesentliche Erkenntnisse und Informationen aus einer Darstellung unmittelbar ersichtlich abgebildet werden.

11. Verfahren nach einem der Ansprüche 1-10, **dadurch gekennzeichnet, dass** die Darstellung als Oberflächenprofil mit dem erwarteten Ergebnis in Verbindung gebracht wird und Störungen, die das Messergebnis verfälschen könnten, wie Flächenstörungen, Verschmutzungen oder "Pixelfehler" der CCD-Matrix mittels einer Software ausgeschlossen werden.

12. Verfahren nach einem der Ansprüche 1-11, **dadurch gekennzeichnet, dass** als Ausgangsmaterialien Körperflüssigkeiten oder Lösungen, enthaltend Bestandteile aus Körperflüssigkeiten verwendet werden, vorzugsweise aus Blut, Serum oder Urin.

13. Gerät zur Auswertung eines Teststreifens (3) mit Test- und Kontrolllinien mit verschiedenen mathematischen Verläufen zwischen Veränderung der Farbintensität und der Analytkonzentrationen enthaltend einen Einschub, eine Optik (9), ein Empfangsbauelement (11) mit einer CCD-Matrix aus flächenhaft in einer Ebene angeordneten Pixeln als Empfangselement, eine Beleuchtung (7) für den Teststreifen, mindestens ein alterungs- und temperaturunabhängiges Referenzfeld im Sichtfeld in der Bildebene neben dem Sichtfeld des Teststreifen und in der optischen Objektebene neben dem zu detektierenden Teststreifen angeordnet, welches permanent und unmittelbar mit dem Teststreifen in Vergleich setzbar ist, eine Auswerteelektronik, enthaltend einen Mikroprozessor und einen Auswerte-Algorithmus, der durch die Intensitätsverteilung der mit der CCD-matrix empfangenen Farbintensität den Teststreifen findet, die zu detektierende Fläche definiert und den Messwert errechnet, eine Anzeige (14), eine Stromversorgung und elektrische Schnittstellen sowie eine Ausgabeeinrichtung, wobei das Referenzfeld an den Außenseiten jeweils ein Feld mit maximaler (15) bzw. minimaler Farbintensität (16), ein Größenvermessungs-Referenzfeld (17), Farbreferenzfelder in den RGB-Farben (18) und ein Peakdetektions-Referenzfeld (19) enthält.

14. Gerät nach Anspruch 13, **dadurch gekennzeichnet, dass** mit dem Gerät die digitale Pixelinformation pro Farb- oder Graustufe im Mikroprozessor in ihrer Intensität als Säule pro Pixel darstellbar ist, wobei die Säulenhöhe der Intensität entspricht, und diese Säulen nebeneinander in einer Ebene darstellbar sind, so dass die Intensitätsverteilung über das Testfeld als Oberflächenprofil darstellbar ist, dessen Höhenverlauf dem Intensitätsverlauf der mit der CCD-Matrix empfangenen Farbintensität entspricht.

15. Gerät nach einem der Ansprüche 13-14, **dadurch gekennzeichnet, dass** es ein mobiles und eigenständiges Gerät ist.

16. Gerät nach einem der Ansprüche 13-15, **dadurch gekennzeichnet, dass** es eine Vorrichtung zur Identifizierung von Teststreifen, vorzugsweise eine Vorrichtung zur Erkennung von Barcodes oder Data- Matrix- Codes enthält.

17. Gerät nach einem der Ansprüche 13-16, **dadurch gekennzeichnet, dass** es über mobile Speicher zu zusätzlichen Tests nachträglich konfiguriert werden kann.

18. Gerät nach einem der Ansprüche 13-17, **dadurch gekennzeichnet, dass** es eine interne Masterkalibrierung enthält.

19. Verwendung eines Geräts nach einem der Ansprüche 13-18 für die Durchführung eines Verfahrens nach einem der Ansprüche 1-12.

## Claims

1. Method for evaluation of a test strip with capture lines and control lines with a device containing an insert for a cassette with test strip, an optic portraying the image of the test strip in the test field of the device onto a receiver, reference fields, a receiving element with a CCD-matrix of pixels areally arranged on a level, a lighting for the test strip, evaluation electronics containing a microprocessor, containing an evaluation algorithm, a display, an energy supply and electrical interfaces as well as an output device, wherein for the evaluation of the test strip on which body-specific substances, in particular proteins released in a certain incident in the body, are detected with the help of labelled antibodies by means of test lines and control lines, the concentration of the labelled antibodies is determined by a colour change in a strip, wherein the colour intensity of the concentration of the antibodies per volume is proportional, the test strip is portrayed with the help of an optic on the CCD-Matrix of areally on one level arranged pixels as receiving element, wherein the intensity in certain discretely portrayable colour or grey levels is used for the evaluation and the relative discoloration is compared via calibration values deposited in the programme, wherein
- the complete image of the test strip is portrayed on the CCD-Matrix,
- the digital pixel information per colour or grey level in the microprocessor is portrayed in its intensity as a column per pixel, wherein the height of the column matches the intensity and these columns being portrayed next to one another on one level such that the distribution of the intensity over the test strip is portrayed as a surface profile, the sequence of height of which matches the course of intensity of the colour intensity received with the CCD-Matrix,
- an evaluation algorithm is carried out, firstly finding the test strip by scans through the peaks running orthogonal to one another, defining an area defining the test strip as area to be detected and integrating over the colour value levels of all these pixels and calculating the average,
- device-internal reference fields, having on the outer edges a field with a maximum and a field with a minimum colour intensity, a variable measurement reference field, colour reference fields in the RGB colours, and a peak detect reference field located on the optical object level of the device are recorded by the CCD-Matrix simultaneously with the image of the test strip with capture lines and control lines, wherein possible error and aging processes are eliminated by the reference fields ,
- the definition of an area for a white balance is carried out, being integrated and thereafter a difference being formed between the average and the white balance,
- the numeric value of the formed difference being compared with calibration values deposited in a database and
- the output of this comparison is provided as a measured value.

2. Method according to Claim 1, **characterised in that** a self-calibration is done before starting the measurement on the basis of the reference fields and that a test identification is carried out.

3. Method according to Claims 1-2, **characterised in that** a peak correction, a noise smoothing, an intensity correction, a filtering for artefacts, an image scaling and rotation correction, a peak recognition, an anti-aging correction and a master volume calibration are done in order to eliminate possible error and aging processes.

4. Method according to Claims 1-3, **characterised in that**
a) a self-calibration is carried out after the appliance is switched on and the cassette with the test strip is pushed in, wherein the colour intensity values are referenced with the reference fields, the image size is referenced and, if necessary, corrected with the values deposited in the memory,
b) the measurement is started and patient's data are entered by the operator,
c) the images are recorded by the CCD-matrix,
d) subsequently the values from the image lines are added up and averages are generated,
e) the peak recognition is carried out, wherein a reference level is defined for the peak, defining the intensity values for the environment of the test strip and,
f) this value is displayed.

5. Method according to Claims 1-4, **characterised in that** the test strip is identified by the device before the measurement on the basis of a barcode attached on the backside of the test strip or a data matrix code arranged in the sight field of the CCD-Matrix.

6. Method according to Claim 1-5, **characterised in that** recording of the images by the CCD-matrix is followed by a self-test of the peak, wherein the point in the test field at which the peak is located is established and, if necessary, the field from which the CCD values are recorded is corrected.

7. Method according to Claims 1-6, **characterised in that**
• a multiple measurement is carried out, wherein an averaging over the measured values is done, with the result that the noise of the CCD-matrix can be equalized,
• an intensity correction is done by means of a white balance, wherein the measured values for the minimum optical intensity are deducted from the measured values,
• a filtering for artefacts is performed, wherein pixel errors and residual noise from the image are minimised by means of a median filter,
• an image scaling and a rotation correction are carried out, wherein a comparison with the reference fields is used to recognise whether the capture line is distorted in the test field and corrected by a rotation correction,
• an area integral is generated for the area between the reference level and the peak of the test strip, wherein an anti-aging correction is performed by comparison of the area integral with the reference curve between minimum and maximum value determined in the self-test (black/white balance) and,
• a master volume calibration is carried out, wherein the measured and integrated value is converted to its calibrated master volume value with master cards with at least one value table with correction values.

8. Method according to Claims 1-7, **characterised in that** the location of the test strip to be evaluated is recognised by means of the surface profile with a single linear scan vertical to the expected strips to be detected and a further linear scan vertical to the first one is held in the area of the strip to be evaluated for recognition of local changes of intensity and thus the location of the first scanning is corrected such that it runs through the maximum of the test strip.

9. Method according to Claims 1-8, **characterised in that** certain distinct areas within the test field, in which the total and the mean value are formed by integration over the colour value levels of all the pixels contained therein, are defined, wherein an area for a section of the test strip is defined such that no colour change is expected therein and this value is defined as a basic value for later occurred white balances and, for the areas in which a colour change is expected, a total value and a mean value are calculated and placed in ratio to the sum and total value from the area without colour change and a value for the concentration of the sought-after substance, preferably protein, is calculated from the ratio in comparison with known calibration values.

10. Method according to Claims 1-9, **characterised in that** the display as surface relief contains the significance of the measurement result, the test fluctuations and possible procedure-induced fluctuations and essential knowledge and information are portrayed directly visibly from a portrayal.

11. Method according to Claims 1-10, **characterised in that** the display as surface relief is brought into connection with the expected outcome and disturbances which could falsify the measurement result such as area disturbances, contaminations or "pixel errors" of the CCD-matrix are ruled out by means of software.

12. Method according to Claims 1-11, **characterised in that** body fluids or solutions containing components from body fluids are used as source materials, preferably from blood, serum or urine.

13. Device for evaluation of a test strip (3) with capture lines and control lines with various mathematical sequences between change of colour intensity and analyte concentrations, containing an insert, an optic (9), a reception element (11) with a CCD-matrix of pixels areally arranged on a level as receiving element, a lighting (7) for the test strip, at least one reference field independent of aging and temperature arranged in the sight field on the image level next to the sight field of the test strip and on the optical object level next to the test strip to be detected, which can permanently and directly be brought into comparison with the test strip, an evaluation electronics containing a microprocessor and an evaluation algorithm, locating the test strip by the intensity distribution of the colour intensity received with the CCD-matrix, defining the area to be detected and calculating the measured value, a display (14), an energy supply and electrical interfaces as well as an output device, wherein on the outer edges in each case the reference field contains a field with a maximum (15) respectively minimum colour intensity (16), a variable measurement reference field (17), colour reference fields in the RGB colours (18), and a peak detect reference field (19).

14. Device according to claim 13, **characterised in that** the digital pixel information can be portrayed with the device per colour or grey level in the microprocessor in its intensity as a column per pixel, wherein the column height matches the intensity, and said columns can be portrayed next to one another on one level, with the result that the distribution of the intensity over the test field can be portrayed as a surface profile, in which the sequence of height matches the sequence of intensity of the colour intensity received with the CCD-matrix.

15. Device according to Claims 13-14, **characterised in that** it is a mobile and independent device.

16. Device according to Claims 13-15, **characterised in that** it contains a device for identification of test strips, preferably a device for recognition of barcodes or data matrix codes.

17. Device according to Claims 13-16, **characterised in that** it can be configured retroactively for additional tests via mobile memories.

18. Device according to Claims 13-17, **characterised in that** it contains an internal master calibration.

19. Use of a device according to Claims 13-18 for the implementation of a method according to Claims 1-12.

## Revendications

1. Procédé pour l'évaluation d'une bande-test avec lignes de test et de contrôle avec un appareil, contenant une insertion pour une cassette avec bandes-tests, un système optique représentant l'image de la bande-test sur un récepteur dans la zone de test de l'appareil, des zones de référence, un composant récepteur avec une matrice CCD composée de pixels disposés en surface sur un niveau, un éclairage pour la bande-test, une électronique d'évaluation, contenant un microprocesseur et un algorithme d'évaluation, un écran, une alimentation en courant et des interfaces électriques ainsi qu'un dispositif d'émission, moyennant quoi, pour l'évaluation de la bande-test sur laquelle des substances corporelles, notamment des protéines, qui ont été libérées lors d'un certain événement dans le corps, sont détectées à l'aide d'anticorps labellisés sur la base des lignes de test et de contrôle pour le test, la concentration des anticorps labellisés est définie par un changement de couleur dans une bande, l'intensité des couleurs étant proportionnelle à la concentration des anticorps par volume, la bande-test est représentée à l'aide d'un système optique sur la matrice CCD composée de pixels disposés en surface sur un niveau comme élément récepteur, l'intensité dans certains niveaux de couleur ou de gris représentables discrètement est utilisée par pixel et la coloration relative est comparée aux valeurs d'étalonnage stockées dans le programme,
- l'image complète de la bande-test étant représentée sur la matrice CCD,
- les informations numériques sur les pixels par niveau de couleur ou de gris étant représentées dans le microprocesseur dans leur intensité comme colonne par pixel, la hauteur de colonne correspondant à l'intensité et ces colonnes étant représentées les unes à côté des autres sur un niveau de sorte que la répartition de l'intensité soit représentée comme profil superficiel sur la bande-test, dont la courbe de la hauteur correspond à la courbe de l'intensité des couleurs obtenue avec la matrice CCD,
- un algorithme d'évaluation, lequel trouve d'abord la bande-test par des scans orthogonaux entre eux par le profil superficiel de la bande-test, étant effectué, définissant une zone qui définit la bande-test comme surface à détecter et l'intégrant par les niveaux des valeurs des couleurs de tous ces pixels et formant la valeur moyenne,
- des zones de référence internes à l'appareil qui contiennent, aux faces extérieures, une zone avec une intensité de couleur maximale et/ou minimale, une zone de référence de mesure de grandeur, des zones de référence de couleurs dans les couleurs RGB et une zone de référence de détection de crête et qui se trouvent dans un niveau d'objet optique de l'appareil, enregistrées en même temps avec l'image de la bande-test avec lignes de test et de contrôle par la matrice CCD, les éventuels processus d'erreur et d'altération avec les zones de référence étant éliminés,
- la définition d'une zone pour un équilibrage des blancs par lequel l'intégration s'opère, puis une formation de la différence entre la valeur moyenne et l'équilibrage des blancs, étant effectuée,
- la comparaison de la valeur de la formation de la différence avec une valeur d'étalonnage stockée dans une base de données et
- l'édition de la comparaison comme valeur moyenne étant effectuées.

2. Procédé conformément à la revendication n°1, **caractérisé par le fait qu'**un auto-étalonnage est effectué sur la base des zones de référence avant le début de la mesure et qu'une identification du test est effectuée.

3. Procédé conformément à l'une des revendications n°1 à n° 2, **caractérisé par le fait que**, pour l'élimination des éventuels processus d'erreur et d'altération, une correction de crête, un lissage du bruit, une correction de l'intensité, un filtrage des articles, une échelle de l'image et une correction de la rotation, une détection de la crête, une correction anti-âge et un étalonnage du volume général sont effectués.

4. Procédé conformément à l'une des revendications n°1 à n°3, **caractérisé par le fait**
a) **qu'**un auto-étalonnage est effectué après la mise en marche de l'appareil et l'insertion de la cassette avec bandes-tests, les valeurs d'intensité des couleurs étant référencées avec les zones de référence, la taille d'image étant référencée et étant, le cas échéant, corrigée par les valeurs stockées dans la mémoire
b) la mesure étant lancée par l'opérateur et les données des patients saisies,
c) les images étant enregistrées par la matrice CCD
d) les valeurs des lignes d'images étant ensuite additionnées et les valeurs moyennes établies,
e) la détection de la crête étant effectuée, un niveau de référence définissant les valeurs d'intensité pour l'environnement de la bande-test, étant défini pour la crête et
f) cette valeur étant affichée.

5. Procédé conformément à l'une des revendications n°1 à n°4, **caractérisé par le fait que**, la bande-test est identifiée par l'appareil sur la base d'un code barres apposé au dos de la bande-test ou d'un code Data-Matrix disposé dans le champ visuel de la matrice avant la mesure.

6. Procédé conformément à l'une des revendications n°1 à n°5, **caractérisé par le fait que**, après l'enregistrement des images par la matrice CCD, un auto-test de la crête est effectué, moyennant quoi l'endroit dans la zone de test où se trouve la crête, étant constaté, et la zone à partir de laquelle les valeurs CCD sont enregistrées, étant corrigée le cas échéant.

7. Procédé conformément à l'une des revendications n°1 à n°6, **caractérisé par le fait**
• **qu'**une mesure multiple est effectuée, une information sur les valeurs mesurées étant fournie de sorte que le bruit de la matrice CCD puisse être égalisé,
• **qu'**une correction de l'intensité est effectuée au moyen de l'équilibrage des blancs, les valeurs mesurées pour l'intensité optique minimale étant déduites des valeurs mesurées,
• **qu'**un filtrage des articles est effectué, les erreurs de pixels étant éliminées par un filtre médian et les bruits résiduels de l'image étant minimisés,
• **qu'**une échelle de l'image et une correction de la rotation sont effectuées, moyennant quoi il est identifié, dans la comparaison avec les zones de référence, si la ligne de test est tournée dans la zone de test et si cela est corrigé par une correction de la rotation,
• **qu'**une intégrale de la surface pour la surface entre le niveau de référence et la crête de la bande-test est formée, une correction anti-âge étant effectuée par la comparaison de l'intégrale de la surface avec la courbe de référence entre les valeurs minimale et maximale (équilibrage des noirs / blancs), établie lors de l'auto-test et
• **qu'**un étalonnage du volume général est effectué, la valeur mesurée et intégrée étant convertie sur cette valeur de volume général étalonnée avec des cartes maîtres avec au moins un tableau des valeurs avec valeurs de correction.

8. Procédé conformément à l'une des revendications n°1 à n°7, **caractérisé par le fait que** la position de la bande-test à évaluer est identifiée au moyen du profil superficiel avec un seul balayage linéaire, perpendiculaire aux bandes à détecter escomptées, et un autre balayage linéaire perpendiculaire au premier étant effectué dans la zone de la bande à évaluer pour la détection des modifications d'intensité locales et la position du premier balayage étant, par conséquent, corrigée de sorte que ce dernier traverse le maximum de la bande-test.

9. Procédé conformément à l'une des revendications n°1 à n°8, **caractérisé par le fait que** certaines surfaces délimitées dans lesquelles la valeur cumulée et valeur moyenne est établie par une intégration par les niveaux des valeurs de couleurs de tous les pixels contenus dans ces derniers, sont définies dans la zone de test, une surface étant définie pour une zone de la bande-test de sorte qu'un changement de couleur ne soit pas escompté dans celle-ci et que cette valeur soit définie comme valeur de base pour des équilibrages de blancs ultérieurs et pour les zones dans lesquelles un changement de couleur est escompté, qu'une valeur cumulée et valeur moyenne qui est fixée en rapport avec la valeur cumulée et moyenne de la zone sans changement de couleur, soit calculée et qu'une valeur pour la concentration de la substance recherchée, de préférence des protéines, soit calculée à partir du rapport dans la comparaison avec les valeurs d'étalonnage connues.

10. Procédé conformément à l'une des revendications n°1 à n°9, **caractérisé par le fait que** la représentation en tant que profil superficiel contient la signification du résultat de la mesure, les variations de test et les éventuelles variations justifiées du point de vue du procédé et que les résultats et les informations essentielles sont clairement représentés à partir d'une image.

11. Procédé conformément à l'une des revendications n°1 à n°10, **caractérisé par le fait que** la représentation sous forme de profil superficiel est mise en relation avec le résultat escompté et que des défauts susceptibles de fausser le résultat de la mesure, comme des défauts de surface, des encrassements ou des « erreurs de pixels » de la matrice CCD, sont exclus au moyen d'un logiciel.

12. Procédé conformément à l'une des revendications n°1 à n°11, **caractérisé par le fait que** des liquides corporels ou des solutions, contenant des composés provenant de liquides corporels, de préférence, du sang, du sérum ou de l'urine, sont utilisés comme matières de base.

13. Appareil pour l'évaluation d'une bande-test (3) avec lignes de test et de contrôle avec diverses courbes mathématiques entre le changement de l'intensité des couleurs et les concentrations d'analyte, contenant une insertion, un système optique (9), un module récepteur (11) avec une matrice CCD composée de pixels disposés en surface sur un niveau comme élément récepteur, un éclairage (7) pour la bande-test, au moins une zone de référence indépendante de l'altération et de la température dans le champ visuel au niveau de l'image à côté du champ visuel de la bande-test et disposée dans le niveau d'objet optique à côté de la bande-test à détecter, laquelle est comparable en permanence et directement avec la bande-test, une électronique d'évaluation contenant un microprocesseur et un algorithme d'évaluation qui trouve, par la répartition de l'intensité des couleurs obtenue avec la matrice CCD, la bande-test qui définit les surfaces à détecter et calcule la valeur de mesure, un écran (14), une alimentation en courant et des interfaces électriques ainsi qu'un dispositif d'émission, la zone de référence aux faces extérieures contenant respectivement une zone avec une intensité de couleur maximale (15) et/ou minimale (16), une zone de référence de mesure de grandeur (17), des zones de référence de couleurs dans les couleurs RGB (18) et une zone de référence de détection de crête (19).

14. Appareil conformément à la revendication n°13, **caractérisé par le fait que** les informations numériques sur les pixels par niveau de couleur ou de gris sont représentables dans le microprocesseur dans leur intensité comme colonne par pixel avec l'appareil, le niveau de la colonne correspondant à l'intensité et ces colonnes étant représentables les unes à côté des autres dans un niveau de sorte que la répartition de l'intensité soit représentable comme profil superficiel sur la zone de test, dont la courbe de la hauteur correspond à la courbe de l'intensité des couleurs reçues avec la matrice CCD.

15. Appareil conformément à l'une des revendications n°13 à n°14, **caractérisé par le fait que** c'est un appareil mobile et autonome.

16. Appareil conformément à l'une des revendications n°13 à n°15, **caractérisé par le fait qu'**il contient un dispositif pour l'identification de bandes-test, de préférence un dispositif pour la détection de codes barres ou de codes Data-Matrix.

17. Appareil conformément à l'une des revendications n°13-16, **caractérisé par le fait qu'**il peut être configuré ultérieurement par des mémoires mobiles pour des tests supplémentaires.

18. Appareil conformément à l'une des revendications n°13 à n°17, **caractérisé par le fait qu'**il contient un étalonnage maître interne.

19. Utilisation d'un appareil conformément à l'une des revendications n°13 à n°18 pour l'exécution d'un procédé conformément à l'une des revendications n°1 à n°12.
